# EUROPEAN PATENT SPECIFICATION

(11) **EP 2 471 373 B1**
(45) Date of publication and mention of the grant of the patent: **07.08.2013**
(21) Application number: 11195629.8
(22) Date of filing: 23.12.2011
(51) Int. Cl.: A22C 25/12, A22C 29/02, B65G 47/244

(54) **Device for the positioning of shrimps**
Vorrichtung zur Positionierung von Garnelen
Dispositif de positionnement de crevettes

(30) Priority: 30.12.2010 NL 2005939
(43) Date of publication of application: 04.07.2012
(73) Proprietor: Heiploeg B.V., 9974 SL Zoutkamp (NL)
(72) Inventor: Veerman, Jacobus Johannes Michel, 1132 SC Volendam (NL)
(74) Representative: Van Breda, Jacobus

(56) References cited:
- EP-A1- 0 743 010
- EP-A1- 2 174 551
- WO-A2-2007/138616
- DE-A1- 3 704 423
- GB-A- 2 415 944

## Description

The invention relates to a device for the positioning of shrimps at a predefined position and with a predefined orientation on a deposition surface, the shrimps being supplied to the device in a random position and orientation.

Such a device is known. The known devices comprise essentially mechanical means to position the shrimps. In EP 0 743 010 B1 for example a mechanized feeding and positioning device has been described, that is used for the feeding of shrimps to a peeling device. The peeling device requires the shrimps to be placed at a certain position and in a certain orientation on a conveyor. For this mechanical feeding and positioning means are described that utilize a vertical conveyor that takes up the shrimps from the container, and deposits the shrimps via different chutes on a final positioning belt from where they are fed to a peeling device. Such a device for feeding and positioning the shrimps that is composed of several conveyors and chutes has the disadvantage that a non-negligible number of the positioned shrimps ends up in a not quite proper position, which leads to a considerable number of incompletely peeled shrimps or shrimps that are damaged by the peeling device and consequently are lost.

It is thus an aim of the present invention to provide a device for the positioning of shrimps wherein the shrimps can be positioned in a accurate way at a predefined position and with a predefined orientation, in such a way that when the shrimps subsequently are fed to an automatically peeling device, the peeling can take place in a reliable way and such that the number of shrimps that are lost by wrong peeling is considerably smaller than with the known feeding device.

This aim is achieved by a device for the positioning of shrimps that is characterized in that the device comprises an imaging device for taking and recording images of the supplied shrimps, and comprising a robot arm with gripping means for picking up a supplied shrimp and for depositing it on a deposition surface at a predefined position and with a predefined orientation, as well as a control that is connected with the imaging device and the robot arm. It is an important advantage that the shrimps can now be supplied to the device according to the invention in a random position and a random orientation without any problem. By means of the imaging device the position of the shrimps can then be recognized which enables the robot arm to pick up the shrimps in a proper way and the robot arm subsequently deposits them on a deposition surface in a predefined position and with a predefined orientation. The robot arm picks up the shrimps one by one and positions the individual shrimps in the desired way on the deposition surface. In spite of the vulnerability of shrimps (a shrimp on average weighs about 2 gr.) it surprisingly appeared possible to position the shrimps at the deposition surface at the mentioned predefined position and with the predefined orientation so that the shrimps subsequently automatically can be peeled in a proper way, and this in a very accurate way and at an industrial scale, i.e. with a relatively high speed. ,

It is noted that from GB-A-2 415 944 the use of an imaging device for taking and recording images of supplied food products, and a control coupled to that that drives a robot arm with gripping means for picking up these food products and depositing them at a predefined position and with predefined orientation on a depositing surface, is known. In this publication it essentially concerns chicken breasts and drum sticks, of which, with respect to weight and size, both handling as well as the accuracy of the orientation is less sensitive than it is the case with shrimps. In particular the sensitivity of shrimps for the correct positioning and the vulnerability of shrimps for a proper handling makes it for a skilled person not obvious to consider a general publication such as GB-A-2 415 944 applicable as a possible source of a problem solution for the controlled and accurate supply of shrimps, without damaging these shrimps, in another and better way than is proposed in EP-A-0 743 010.

In an effective embodiment the control comprises recognition means for recognising a shrimp as well as determining its position and orientation, using predefined characteristics in a recorded image, that is taken and recorded by the imaging device. This enables the control to control the robot arm and direct it to the proper position for picking up the shrimp and also take into account the orientation that the shrimp has at the position of the picking-up. The control also comprises position determination means for determining the development of the position over time of the recognized shrimp. By utilizing consecutive images of which the time interval is known, speed and direction of the movement can be determined and through these the robot arm can be directed to the proper position for picking up the shrimp.

In a preferred embodiment of the device according to the invention the supply of the shrimps takes place on a supply conveyor. This makes it possible that the shrimps are moving over a fixed and known plane so that the position of the shrimps on that plane can be accurately determined by using a fixed camera and image processing. Because a transport conveyor usually has a constant speed, it is very simple to determine from two or possibly more images the development of the position in time of the recognized shrimps. Also it is relatively simple with known means, such as a vibrating device, to ensure that the shrimps on the supply conveyor are placed separated from each other so that the picking-up by the robot arm can be performed individually for each shrimp without touching one of the neighbouring shrimps.

When the deposition surface is situated on a removal conveyor, then depositing the picked-up shrimps on the deposition surface is strongly simplified, so that each deposited shrimp can be deposited at the same special position because the deposition surface is a moving surface. The shrimp once deposited will move with the conveyor and free its position for a next shrimp to be deposited.

In a very advantageous embodiment of the invention the robot arm moves synchronously with the supply conveyor in picking-up the shrimp. In this case the relative speed between the robot arm and the shrimp is zero or approximately zero so that the picking-up can take place very accurately and without any damage to the shrimp.

Although it is possible, as has been mentioned above, that the speed of the supply conveyor is determined by comparing two or more images of the imaging device, the speed of the supply conveyor can also be determined using a sensor that is connected to the control. In the case that the deposition surface is at another conveyor, the positioning of the shrimp by the robot arm in depositing it at the position surface can be done with increased accuracy when the robot arm moves synchronously with the removal conveyor. Then the shrimps will not be subjected to acceleration during the deposition so that the probability is removed that the shrimp will change position and orientation resulting from an acceleration at its deposition. It is possible that the speed of the removal conveyor is predefined and recorded in the control. However, it is also possible that the speed of the removal conveyor is determined using a sensor that is connected to the control. It is particularly advantageous that when the speed of the removal conveyor is predefined and recorded in the control, that the recorded speed in the control can be changed e.g. by an input device/user interface. In all cases wherein the robot arm moves synchronously with the removal conveyor during deposition it is advantageous that the removal conveyor can have a higher speed than would be the case if the robot arm would not move with the removal conveyor.

The predefined characteristics of the shrimp that have been recorded in the control can be modified in a advantageous embodiment of the invention. This makes it possible to adjust the device to different types of shrimps. It will also be noted that in changing the characteristics the device is thus not limited to the positioning of shrimps but also of other objects, of which the contours are constant and are therefore recognizable, can be positioned using the device according to the invention.

The speed of the device can be increased when multiple separately controllable robot arms are used. The control must then be arranged such that collisions between two robot arms are prevented.

In an advantageous embodiment the gripping means comprise a suction pad. Using a suction pad and a corresponding suction or a vacuum device the shrimps can be picked up in a reliable and sure way and being moved and being repositioned without running the risk to get damaged. The invention will now be explained using an example of an embodiment of the invention with reference to the attached drawing in which is shown:
Fig. 1 a schematic representation of a system for peeling of shrimps comprising two devices according to the invention;
Fig. 2 a part of a system according to fig. 1 in top view; and
Fig. 3 the part of the system according to fig. 2 in side elevation.

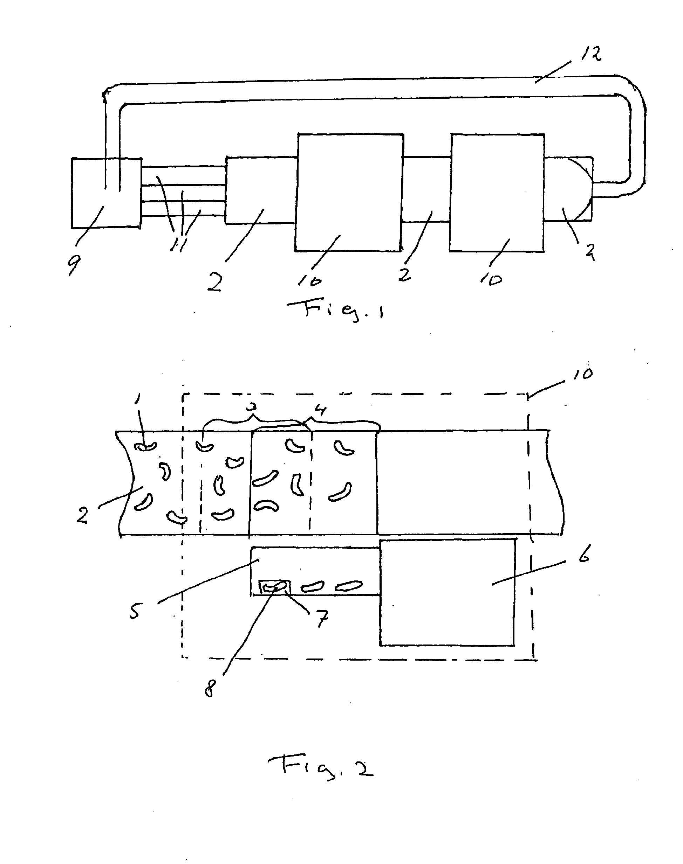

Figure 1 shows a schematic representation of a system for peeling of shrimps comprising two devices according to the invention. In figure 1 seen on the left a hopper 9 is visible in which shrimps to be peeled can be poured. From hopper 9 the shrimps are falling on vibrating plates 11, of which three have been drawn here and that are shaking the shrimps in such a way, that at the end of the vibrating plates 11 they are falling separately on conveyor belt 2 that moves in the direction of the arrow. Conveyor belt 2 transports the shrimps to two devices according the invention for positioning the shrimps as well as two pealing devices 6 for the shrimps, one of each being in each of the two sections 10 as has been represented in figure 1. At the end of supply conveyor 2 possibly remaining shrimps that are unpeeled are collected and via return conveyor 12 returned to hopper 9.

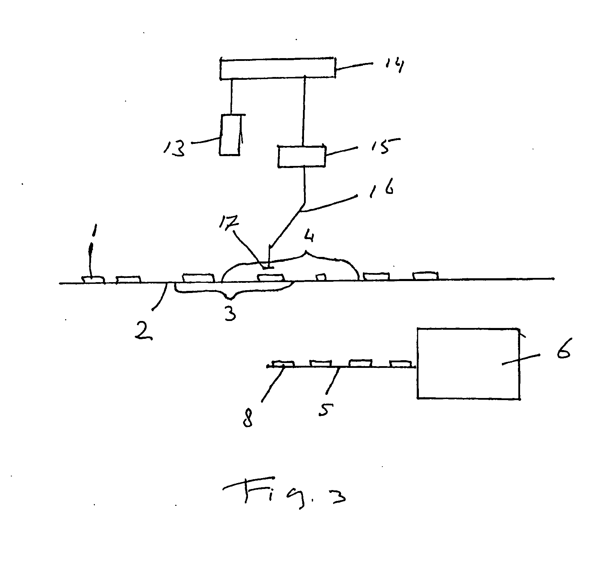

Figures 2 and 3 show a part of the system that is represented in figure 1 and notably the part that mainly comprises sections 10, respectively seen from above and from aside.

Figure 2 shows a supply conveyor 2 with shrimps 1 of each only one is indicated with the reference number 1, to keep the figure clear. The other shrimps 1 can be recognized from their shape. On conveyor 2 an image area 3 is indicated with two dotted lines. Image area 3 is the area that is covered by imaging device 13. Imaging device 13 takes shots of image area 3 in fixed time intervals and sends these images on to control 14. Control 14 is arranged for processing of the images that control 14 received from imaging device 13 and comprises recognition means that, using predefined characteristics of shrimps 1 that have been stored in a memory that is part of control 14, is able to recognize these shrimps 1 in the images as well as the position and orientation of each of the individual shrimps 1. The control also comprises position determination means that by comparing the positions in consecutive images of the individually recognized shrimps, determines the position development over time of each of the recognized shrimps. Thus in the control, the position and the speed of each of the separately recognized shrimps are known at any moment. Robot drive 15 and connected therewith robot arm 16 are also connected to the control. By means of the signals delivered from the control to the robot drive 15, robot arm 16 can be positioned in any point of the predefined space, which space comprises in any case a pick-up area 4 that is part of supply conveyor 2 and is indicated in the figure with two full lines, and also the deposition area 7 that is situated on removal conveyor 5, next to supply conveyor 2, as can be seen from figure 2. In figure 3 removal conveyor 5 is shown somewhat lower than supply conveyor 2. The positions between conveyors 2 and 5 are not important for the invention, as long as pick-up area 4 and deposition area 7 both completely are situated within the operating range of robot arm 16. Robot arm 16 comprises at its free end gripping means 17, that in this example of an embodiment of the device according the invention are equipped with one or more suction pads. With aid of suction pads 17 the shrimps 1 can be picked up and be manipulated. The gripping means 17 are integrated in the robot arm 16 in such a way that they can be rotated over 360° so that in a position all possible orientations can be given. The device according the invention is formed by imaging device 13, control 14, robot drive 15 and robot arm 16 including gripping means/suction pads 17. Using the position determination means mentioned before robot arm is now steered to a shrimp 1 that is in pick-up area 4 of supply conveyor 2 to pick up this shrimp 1 from the supply conveyor 2 using suction pads 17 and move it to deposition area 7 on removal conveyor 5, in such a way that the predefined point of shrimp 1 is placed on deposition position 8 of deposition area 7. At the same time the suction pads with shrimp 1 are oriented during the movements to the deposition position 8 in such a way that the shrimp 1 is put at deposition position 8 in the desired predefined orientation. Subsequently the robot arm 16 is moved by the control to a next shrimp 1 that has moved into pick-up area 4 to repeat the actions described before and with such a speed that the position area 7 in the mean time has been vacated because the previously positioned and deposited shrimp 1 has been transported away by means of the movement of the conveyor 5, creating space for the deposition of a next shrimp 1. It will be clear that image area 3, pick-up area 4, deposition area 7 and deposition position 8 are fixed areas respectively position in space and will cover new parts of the conveyors 2 and 5 every time because of the movement of conveyors 2 and 5.

In one embodiment of the device according to the invention, the speed of movement of the removal conveyor 5 is stored in control 14 as fixed data. However, it is also possible to position and arrange imaging device 13 in such a way that deposition area 7 on removal conveyor 5 is completely situated within image area 3, so that the images taken by the imaging device 13 and that are processed in control 14 also comprise images of the deposition area 7. By comparing consecutive images of the deposition area 7 also the transport speed of the removal conveyor 5 can be determined by control 14. Control 14 can consequently control the speed of robot arm 16 in such a way that it is guaranteed that the shrimp 1 to be deposited is deposited in position area 7 at a moment that the previously deposited shrimp 1 has just left this deposition area.

In a preferred embodiment of the invention the device according the invention also comprises a user interface to change for instance the characteristics of the shrimps to be deposited or other objects to be positioned to for instance another type of shrimp, or also to change other control parameters. In the case that the speed of the removal conveyor is stored in the memory of the control 14 as fixed data this speed can also be changed by using this user interface. However, this change can also be made using a speed sensor that is connected to control 14 and is not further represented in the figures, and that measures the speed of the removal conveyor 5.

With the device according to the invention that has been described shrimps are positioned and oriented in a very accurate and reliable way, starting from a random position on a transport conveyor. Tests have shown that this positioning can be executed within the tolerances necessary for an automatic peeling device with a speed of approximately 110 shrimps per minute.

### List of reference numbers:

- 1: Shrimp
- 2: Supply conveyor
- 3: Image area
- 4: Pick-up area
- 5: Removal conveyor
- 6: Peeling device
- 7: Deposition area
- 8: Deposition position on 7
- 9: Hopper
- 10: Section with positioning and peeling system for shrimps
- 11: Vibrating plates
- 12: Return conveyor
- 13: Imaging device
- 14: Control
- 15: Robot drive
- 16: Robot arm
- 17: Suction pads/gripping means

## Claims

1. Device (13-17) for the positioning of shrimps (1) at a predefined position (8) and with a predefined orientation on a deposition surface (7), the shrimps (1) being supplied to the device in a random position and orientation, wherein the shrimps subsequently are fed to an automatically peeling device, **characterized in that** the device (13-17) comprises an imaging device (13) arranged for taking and recording images of the supplied shrimps (1), a robot arm (16) with gripping means (17) for picking up a supplied shrimp (1) and depositing it a predefined position (8) and with a predefined orientation on the depositing surface (7) and a control (14) that is connected with the imaging device (13) and the robot arm (16).

2. Device (13-17) according to claim 1, **characterized in that** the control (14) is arranged for processing images that have been taken by the imaging device (13) and comprises:
- recognition means for recognizing in a recorded image a shrimp as well as determining its position and orientation, using predefined characteristics,
- position determination means for determining the position development over time of the recognized shrimp (1).

3. Device (13-17) according to one of the claims 1 or 2, **characterized in that** the supply of shrimps (1) is by a supply conveyor (2).

4. Device (13-17) according to one of the claims 1 to 3, **characterized in that** the deposition surface (7) is on a removal conveyor (5).

5. Device (13-17) according to claim 3 or 4, **characterized in that** the robot arm (16) during picking up of a shrimp (1) moves along with the supply conveyor (2).

6. Device (13-17) according to claim 5, **characterized in that** the speed of the supply conveyor (2) is determined by comparing two images of the imaging device (13).

7. Device according to claim 5, **characterized in that** the speed of the supply conveyor (2) is determined using a sensor connected to the control (14).

8. Device (13-17) according to one of the claims 4 to 7, **characterized in that** during deposition the robot arm (16) moves along with the removal conveyor (5).

9. Device (13-17) according to claim 8, **characterized in that** the speed of the removal conveyor (5) is predetermined and recorded in the control (14).

10. Device (13-17) according to claim 9, **characterized in that** the speed of the removal conveyor (5) can be changed.

11. Device (13-17) according to claim 8, **characterized in that** the speed of the removal conveyor (5) is determined using a sensor connected to the control (14).

12. Device (13-17) according to one of the claims 2 to 11, **characterized in that** the predefined characteristics can be modified.

13. Device (13-17) according to one of the claims 1 to 12, **characterized in that** the device comprises two essentially equal but separately controllable robot arms (16).

14. Device (13-17) according to one of the claims 1 to 13, **characterized in that** the gripping means (17) comprise at least one suction pad (17)

## Patentansprüche

1. Vorrichtung (13-17) zur Positionierung von Garnelen (1) auf einer vorbestimmten Position (8) und mit einer vorbestimmten Ausrichtung auf einer Auflagefläche (7), wobei die Garnelen (1) der Vorrichtung in einer zufälligen Position und Ausrichtung zugeführt werden, wobei die Garnelen anschließend einer automatischen Schälvorrichtung zugeführt werden,
**dadurch gekennzeichnet, dass**
die Vorrichtung (13-17) eine Bildaufnahmevorrichtung (13), die dafür vorgesehen ist, Bilder der zugeführten Garnelen (1) zu machen und aufzunehmen, einen Roboterarm (16) mit einer Greifeinrichtung (17) zum Aufnehmen einer zugeführten Garnele (1) und Ablegen derselben an einer vorbestimmten Position (8) und mit einer vorbestimmten Ausrichtung auf der Auflagefläche (7) und eine Steuerung (14) aufweist, die mit der Bildaufnahmevorrichtung (13) und dem Roboterarm (16) verbunden ist.

2. Vorrichtung (13-17) nach Anspruch 1,
**dadurch gekennzeichnet, dass**
die Steuerung (14) dafür vorgesehen ist, Bilder zu verarbeiten, die von der Bildaufnahmevorrichtung (13) gemacht wurden und Folgendes aufweist:
- eine Erkennungseinrichtung zum Erkennen einer Garnele in einem aufgenommenen Bild und zum Ermitteln ihrer Position und Ausrichtung unter Verwendung vorbestimmter Eigenschaften,
- eine Positionsermittlungseinrichtung zum Ermitteln der Entwicklung der Position der erkannten Garnele (1) über der Zeit.

3. Vorrichtung (13-17) nach einem der Ansprüche 1 oder 2,
**dadurch gekennzeichnet, dass**
die Zufuhr der Garnelen (1) mittels eines Zuführförderers (2) erfolgt.

4. Vorrichtung (13-17) nach einem der Ansprüche 1 bis 3,
**dadurch gekennzeichnet, dass**
die Auflagefläche (7) sich auf einem Abführförderer (5) befindet.

5. Vorrichtung (13-17) nach Anspruch 3 oder 4,
**dadurch gekennzeichnet, dass**
der Roboterarm (16) sich während des Aufnehmens einer Garnele (1) entlang des bzw. zusammen mit dem Zuführförderer (2) bewegt.

6. Vorrichtung (13-17) nach Anspruch 5,
**dadurch gekennzeichnet, dass**
die Geschwindigkeit des Zuführförderers (2) durch Vergleichen zweier Bilder der Bildaufnahmevorrichtung (13) ermittelt bzw. festgelegt wird.

7. Vorrichtung (13-17) nach Anspruch 5,
**dadurch gekennzeichnet, dass**
die Geschwindigkeit des Zuführförderers (2) unter Verwendung eines mit der Steuerung (14) verbundenen Sensors ermittelt bzw. festgelegt wird.

8. Vorrichtung (13-17) nach einem der Ansprüche 4 bis 7,
**dadurch gekennzeichnet, dass**
der Roboterarm (16) sich während des Ablegens entlang des bzw. zusammen mit dem Abführförderer (5) bewegt.

9. Vorrichtung (13-17) nach Anspruch 8,
**dadurch gekennzeichnet, dass**
die Geschwindigkeit des Abführförderers (5) in der Steuerung (14) voreingestellt und aufgezeichnet wird.

10. Vorrichtung (13-17) nach Anspruch 9,
**dadurch gekennzeichnet, dass**
die Geschwindigkeit des Abführförderers (5) verändert werden kann.

11. Vorrichtung (13-17) nach Anspruch 8,
**dadurch gekennzeichnet, dass**
die Geschwindigkeit des Abführförderers (5) unter Verwendung eines mit der Steuerung (14) verbundenen Sensors ermittelt bzw. festgelegt wird.

12. Vorrichtung (13-17) nach einem der Ansprüche 2 bis 11,
**dadurch gekennzeichnet, dass**
die vorbestimmten Eigenschaften verändert werden können.

13. Vorrichtung (13-17) nach einem der Ansprüche 1 bis 12,
**dadurch gekennzeichnet, dass**
die Vorrichtung zwei im Wesentlichen gleiche, aber unabhängig vorieinander steuerbare Roboterarme (16) aufweist.

14. Vorrichtung (13-17) nach einem der Ansprüche 1 bis 13,
**dadurch gekennzeichnet, dass**
die Greifeinrichtung (17) wenigstens einen Saugteller (17) aufweist.

## Revendications

1. Dispositif (13-17) pour le placement de crevettes (1) en une position prédéfinie (8) et selon une orientation prédéfinie sur une surface de dépôt (7), les crevettes (1) étant distribuées jusqu'au dispositif dans une position et une orientation aléatoires, les crevettes étant ensuite distribuées jusqu'à un dispositif de décorticage automatique, ledit dispositif (13-17) étant **caractérisé en ce qu'**il comprend un dispositif de formation d'image (13) conçu pour prendre et enregistrer des images des crevettes (1) distribuées, un bras robotique (16) pourvu d'un moyen de préhension (17) pour prélever une crevette (1) distribuée et la déposer en une position prédéfinie (8) et selon une orientation prédéfinie sur la surface de dépôt (7) et un dispositif de commande (14) qui est relié au dispositif de formation d'image (13) et au bras robotique (16).

2. Dispositif (13-17) selon la revendication 1, **caractérisé en ce que** le dispositif de commande (14) est conçu pour traiter des images qui ont été prises par le dispositif de formation d'image (13) et comprend :
- un moyen de reconnaissance pour reconnaître, dans une image enregistrée, une crevette ainsi que pour déterminer sa position et son orientation, par utilisation de caractéristiques prédéfinies,
- un moyen de détermination de position pour déterminer l'évolution de la position dans lé temps de la crevette (1) reconnue.

3. Dispositif (13-17) selon l'une des revendications 1 ou 2, **caractérisé en ce que** la distribution de crevettes (1) est réalisée par un transporteur d'amenée (2).

4. Dispositif (13-17) selon l'une des revendications 1 à 3, **caractérisé en ce que** la surface de dépôt (7) se trouve sur un transporteur d'extraction (5).

5. Dispositif (13-17) selon la revendication 3 ou 4, **caractérisé en ce que** le bras robotique (16), au cours du prélèvement d'une crevette (1), se déplace en même temps que le transporteur d'amenée (2).

6. Dispositif (13-17) selon la revendication 5; **caractérisé en ce que** la vitesse du transporteur d'amenée (2) est déterminée par comparaison de deux images du dispositif de formation d'image (13).

7. Dispositif selon la revendication 5, **caractérisé en ce que** la vitesse du transporteur d'amenée (2) est déterminée par utilisation d'un capteur relié au dispositif de commande (14).

8. Dispositif (13-17) selon l'une des revendications 4 à 7, **caractérisé en ce que**, au cours du dépôt, le bras robotique (16) se déplace en même temps que le transporteur d'extraction (5).

9. Dispositif (13-17) selon la revendication 8, **caractérisé en ce que** la vitesse du transporteur d'extraction (5) est prédéterminée et enregistrée dans le dispositif de commande (14).

10. Dispositif (13-17) selon la revendication 9, **caractérisé en ce que** la vitesse du transporteur d'extraction (5) peut être modifiée.

11. Dispositif (13-17) selon la revendication 8, **caractérisé en ce que** la vitesse du transporteur d'extraction (5) est déterminée par utilisation d'un capteur relié au dispositif de commande (14).

12. Dispositif (13-17) selon l'une des revendications 2 à 11, **caractérisé en ce que** les caractéristiques prédéfinies peuvent être modifiées.

13. Dispositif (13-17) selon l'une des revendications 1 à 12,, ledit dispositif étant **caractérisé en ce qu'**il comprend deux bras robotiques (16) essentiellement semblables mais pouvant être commandés séparément.

14. Dispositif (13-17) selon l'une des revendications 1 à 13, **caractérisé en ce que** le moyen de préhension (17) comprend au moins une ventouse (17).
